# EUROPEAN PATENT SPECIFICATION

(11) **EP 4 502 103 B1**
(45) Date of publication and mention of the grant of the patent: **28.10.2026**
(21) Application number: 23778634.8
(22) Date of filing: 30.03.2023
(51) Int. Cl.: C09K 5/14, C10M 145/14

(54) **THERMALLY CONDUCTIVE GREASE COMPOSITION**
WÄRMELEITFÄHIGE SCHMIERFETTZUSAMMENSETZUNG
COMPOSITION DE GRAISSE THERMOCONDUCTRICE

(30) Priority: 28.03.2022 JP 2022052349
(43) Date of publication of application: 05.02.2025
(73) Proprietor: Cosmo Oil Lubricants Co., Ltd., Tokyo 104-8352 (JP)
(72) Inventor: TERAUCHI, Ryuji, Satte-shi, Saitama 340-0193 (JP); KIMURA, Mitsunobu, Satte-shi, Saitama 340-0193 (JP)
(74) Representative: Adamson Jones
(86) International application number: PCT/IB2023/053171
(87) International publication number: WO 2023/187695

(56) References cited:
- WO-A1-2018/221719
- JP-A- 2003 027 080
- JP-A- 2007 262 348
- JP-A- 2013 053 255
- JP-A- 2014 122 307
- JP-A- 2019 081 841
- JP-A- 2019 081 842
- JP-A- 2021 130 772
- JP-A- 2022 030 766

## Description

### Technical Field

The present invention relates to a thermally conductive grease composition.

### Background Art

Among semiconductor components used in electronic devices and the like, there are components that generate heat during use, such as a CPU of a computer and a power semiconductor for power supply control. In order to protect these semiconductor components from heat and enable them to function normally, there is a method of conducting generated heat to a heat dissipation component such as a heat sink and dissipating the heat. A thermally conductive grease composition is applied between a heat generating component such as a semiconductor component and a heat dissipating component so as to bring the components into close contact with each other, and is used for enhancing heat conduction.

As the thermally conductive grease composition, for example, Japanese Patent Publication (JP-B) No. 4667882 proposes "A high thermally conductive compound containing (A) a metal powder having a thermal conductivity of 200 W/m·K or more and an average particle diameter of from 5 to 50 µm, (B) a coarse particle inorganic filler having a new Mohs hardness of 6 or more and an average particle diameter of from 5 to 50 µm, (C) a fine particle inorganic filler having an average particle diameter of from 0.15 to 2 µm, (D) a base oil, and (E) one or more surface modifiers selected from a (poly)glyceryl ether, and an alkenyl succinimide and a boron derivative thereof, in which a total content of (A), (B), and (C) is in a range of from 88 to 97% by mass of a total amount of the compound, a mass ratio of a total content of (A) and (B) to a content of (C) is in a range of from 20:80 to 85:15, a content of (D) is less than 12% by mass of the total amount of the compound, and the components (A), (B), (C), (D), and (E) are blended so that a content of the component (E) is from 0.08 to 4% by mass of the total amount of the compound".

Japanese Patent Publication (JP-B) No. 5300408 proposes "A thermally conductive silicone grease composition containing components (A) to (D), (component (A): aluminum hydroxide powder mixture; component (B): organopolysiloxane; component (C): inorganic compound powder; and component (D): hydrolyzable organopolysiloxane having trifunctionality at one end)'

JP 2014-122307 A relates to a high thermal conductive grease which contains (A) an inorganic powder filler, (B) a base oil ,(C) a specific polycarboxylic acid compound such as polyhydroxy stearic acid, (D) a specific polyglycerine monoalkylether compound such as polyglycerine monooleyl ether, (E) an unsaturated aliphatic acid, and (F) an antioxidant.

### SUMMARY OF INVENTION

### Technical Problem

Regarding the thermally conductive grease composition, the thermally conductive grease composition may be displaced as a result of a thermal shock (pump-out phenomenon) or the like, making it difficult to dissipate heat sufficiently. In such cases, heat-generating components such as a semiconductor component have sometimes caused malfunctions.

Therefore, an object of the embodiments of the disclosure is to provide a thermally conductive grease composition that suppresses the occurrence of pump-out phenomenon. Solution to Problem

The invention is set out in the appended set of claims.

### Advantageous Effects of Invention

According to an embodiment of the disclosure, there is provided a thermally conductive grease composition that suppresses occurrence of a pump-out phenomenon.

### DESCRIPTION OF EMBODIMENTS

Hereinafter, embodiments that are examples of the disclosure will be described. These descriptions and examples illustrate embodiments and do not limit the scope of the invention.

With regard to the stepwise numerical ranges described herein, the upper limit value or the lower limit value described in one numerical range may be replaced with the upper limit value or the lower limit value of another stepwise numerical range. In the numerical ranges described herein, upper limit values or lower limit values of the numerical value ranges may be replaced with values described in Examples.

Each component may contain a plurality of corresponding substances.

In a case in which a plurality of substances corresponding to each component are present in a composition, unless otherwise specified, the amount of each component in the composition means the total amount of the plurality of substances present in the composition.

In the disclosure, "% by mass" has the same definition as that of "% by weight", and "part(s) by mass" has the same definition as that of "part(s) by weight".

In the disclosure, a combination of two or more preferred aspects is a more preferred aspect.

In the disclosure, "JIS" is used as an abbreviation for Japanese Industrial Standards.

In the disclosure, "(meth)acryl" is used in a concept including both acryl and methacryl.

Unless otherwise specified, in the disclosure, a weight average molecular weight (Mw) and a number average molecular weight (Mn) are molecular weights detected by a gel permeation chromatography (GPC) analyzer using a column of TSKgel SuperHM-H (trade name, manufactured by Tosoh Corporation), with a solvent PFP (pentafluorophenol)/chloroform = 1/2 (mass ratio) and a differential refractometer, and converted using polystyrene as a standard substance.

### <Thermally Conductive Grease Composition>

The thermally conductive grease composition according to the disclosure contains a base oil, a thermally conductive filler, an acrylic polymer-based adhesive, and a surface modifier.

The thermally conductive grease composition according to the disclosure suppresses the occurrence of the pump-out phenomenon by means of the above configuration.

The pump-out phenomenon is a phenomenon in which the position of the thermally conductive grease composition shifts owing to a thermal shock.

The reason for this is presumed as follows. However, the following presumption is not intended to be a restrictive interpretation of the thermally conductive grease composition according to the disclosure, and will be described as an example.

When the thermally conductive grease composition according to the disclosure contains an acrylic polymer-based adhesive, the affinity between the thermally conductive filler and an oil component such as a base oil contributed by the inclusion of the surface modifier is further improved, and the adhesion between a subject to which the thermally conductive grease composition is applied and the thermally conductive grease composition is also improved. Therefore, even when subjected to a thermal shock or the like, the thermally conductive grease composition is less likely to be displaced, and the occurrence of the pump-out phenomenon is suppressed.

### (Base Oil)

The thermally conductive grease composition according to the disclosure contains a base oil.

The base oil is not particularly limited, and examples thereof include mineral oil, synthetic hydrocarbon oil, an organic acid ester, a phosphoric acid ester, silicone oil, and fluorine oil.

The base oil may be contained singly, or in combination of two or more kinds thereof.

Examples of the mineral oil include oils obtained by appropriately combining refining methods for a lubricating oil fraction of crude oil, such as solvent refining, hydrogenation refining, hydrogenolysis refining, and hydrogenation dewaxing. Examples of the mineral oil include highly refined paraffinic mineral oils obtained by subjecting hydrogenated refined oils, catalytic isomerized oils, and the like to a treatment such as solvent dewaxing or hydrogenation dewaxing.

Examples of the synthetic hydrocarbon oil include a polyalphaolefin.

Examples of the polyalphaolefin include polyalphaolefins obtained by mixing and polymerizing alpha olefins produced using ethylene; propylene; butene; and a derivative thereof as a raw material singly or in combination of two or more kinds thereof. Specific examples thereof include a polyalphaolefin (PAO) which is a polymer of 1-decene, a polybutene which is a polymer of 1-butene or isobutylene, and a copolymer of an ethylene and an alphaolefin.

The polyalphaolefin is preferably a polymer of an alphaolefin having from 6 to 18 carbon atoms.

The polyalphaolefin preferably contains at least one selected from the group consisting of a polymer of 1-decene and a polymer of 1-dodecene.

Examples of the organic acid ester include a monoester, a diester, and a polyol ester.

Examples of the monoester include an ester of a monobasic acid and an alcohol.

Examples of the monobasic acid include fatty acids such as butanoic acid, pentanoic acid, hexanoic acid, heptanoic acid, octanoic acid, nonanoic acid, decanoic acid, dodecanoic acid, myristic acid, pentadecylic acid, palmitic acid, margaric acid, stearic acid, eicosanoic acid, docosanoic acid, palmitoleic acid, oleic acid, and ricinoleic acid; acrylic acid; and methacrylic acid.

Examples of the alcohol used for the synthesis of the monoester include oleyl alcohol, lauryl alcohol, methanol, ethanol, pentanol, hexanol, ethylene glycol, propylene glycol, glycerol, neopentyl glycol, trimethylolmethane, trimethylolethane, trimethylolpropane, trimethylolbutane, 1,2,6-hexanetriol, pentaerythritol, dipentaerythritol, and lauryl alcohol.

Examples of the diester include an ester of a dibasic acid and an alcohol.

Examples of the dibasic acid include adipic acid, azelaic acid, sebacic acid, and dodecanedioic acid.

The alcohol used for the synthesis of the diester may be a monohydric alcohol or a polyhydric alcohol having two or more hydroxyl groups in one molecule.

As the alcohol used for the synthesis of the diester, the same alcohol as the alcohol used for the synthesis of the monoester can be applied.

Examples of the polyol ester include an ester of a polyol and a saturated fatty acid.

Examples of the polyol include a dihydric alcohol and a polyol in which no hydrogen atom is present on the carbon at the β-position based on the hydroxy group.

Examples of the dihydric alcohol include ethylene glycol, propylene glycol, butylene glycol, 2-butyl-2-ethylpropanediol, and 2,4-diethyl-pentanediol.

Specific examples of the polyol in which no hydrogen atom is present on the carbon at the β-position based on the hydroxy group include neopentyl glycol, trimethylolpropane, and pentaerythritol.

The saturated fatty acid is not particularly limited, and examples thereof include enanthic acid, caprylic acid, pelargonic acid, capric acid, undecylic acid, lauric acid, tridecylic acid, myristic acid, pentadecylic acid, stearic acid, nonadecanoic acid, arachidic acid, and behenic acid.

Examples of the phosphoric acid ester include triethyl phosphate, tributyl phosphate, triphenyl phosphate, tricresyl phosphate, and trixylenyl phosphate.

Examples of the silicone oil include polysiloxanes such as dimethylpolysiloxane and methylphenylpolysiloxane; and modified silicone.

Examples of the fluorine oil include perfluoropolyether.

From the viewpoint of suppressing the occurrence of the pump-out phenomenon, the base oil preferably contains a polyalphaolefin and an ester.

From the viewpoint of suppressing the occurrence of the pump-out phenomenon, a content of the polyalphaolefin is preferably from 70% by mass to 99% by mass, more preferably from 80% by mass to 99% by mass, and still more preferably from 85% by mass to 99% by mass, with respect to the total content of the polyalphaolefin and the ester.

The total content of the base oil is preferably from 2.5% by mass to 8.5% by mass, more preferably from 3.0% by mass to 7.0% by mass, and still more preferably from 3.5% by mass to 6.0% by mass, with respect to a total mass of the thermally conductive grease composition.

From the viewpoint of suppressing the occurrence of the pump-out phenomenon, a kinematic viscosity at 40°C of the base oil is preferably from 10 mm²/s to 600 mm²/s, and more preferably from 20 mm²/s to 450 mm²/s.

The 40°C kinematic viscosity is a value measured based on JIS K2283:2000 kinematic viscosity test method.

### (Thermally Conductive Filler)

The thermally conductive grease composition according to the disclosure contains a thermally conductive filler.

The thermally conductive filler is a filler having a thermal conductivity of 5 W/(m·K) or more.

The thermal conductivity of the thermally conductive filler is a value measured by a laser flash method (JIS R1611:2010).

The material of the thermally conductive filler is not particularly limited, and examples thereof include a zinc oxide, a magnesium oxide, an aluminum oxide, a titanium oxide, a boron nitride, an aluminum nitride, a carbon, a silicon carbide, and a silica.

From the viewpoint of suppressing the occurrence of the pump-out phenomenon, the thermally conductive filler preferably includes at least one selected from the group consisting of a zinc oxide and an aluminum oxide, and more preferably includes a zinc oxide.

A volume average particle diameter of the thermally conductive filler is preferably from 0.1 µm to 50 µm, more preferably from 0.15 µm to 45 µm, and still more preferably from 0.15 µm to 40 µm.

The volume average particle diameter of the thermally conductive filler is measured by a laser diffraction scattering method in accordance with JIS Z 8825:2013 (corresponding international standard: ISO13320).

Specifically, a volume distribution of the thermally conductive filler is measured for a sample containing the thermally conductive filler using a laser diffraction scattering particle size measuring apparatus. Based on the obtained measured value (volume distribution), the volume average particle diameter of the thermally conductive filler contained in the sample can be determined.

As an example of the measuring apparatus, a nanoparticle size distribution measuring apparatus SALD-7500nano manufactured by Shimadzu Corporation can be used as a laser diffraction scattering particle size measuring apparatus.

The thermally conductive filler may be a surface-treated thermally conductive filler. The surface-treated thermally conductive filler can contribute to improvement of affinity with components other than the thermally conductive filler.

The surface treatment of the thermally conductive filler is not particularly limited, and may be a physical treatment or a chemical treatment, and a known treatment capable of treating surfaces of particles constituting the thermally conductive filler can be applied.

The surface treatment is preferably a treatment using a surface treatment agent.

Examples of the surface treatment agent include a silane-based coupling agent, a titanium-based coupling agent, a carboxylic acid-based coupling agent, a phosphoric acid-based coupling agent, a fatty acid, a polymer compound, a surfactant, and a fat and oil.

The thermally conductive filler may be surface-treated using a surface treatment agent (for example, a silane-based coupling agent) from the viewpoint of dispersibility.

A content of the thermally conductive filler is preferably from 80% by mass to 98% by mass, more preferably from 85% by mass to 97% by mass, and still more preferably from 90% by mass to 97% by mass, with respect to a total mass of the thermally conductive grease composition.

From the viewpoint of suppressing the occurrence of the pump-out phenomenon, the thermally conductive filler preferably contains two or more kinds of thermally conductive fillers having different volume average particle diameters.

The thermally conductive filler preferably contains a thermally conductive filler A having a volume average particle diameter of from 0.15 µm to less than 2 µm and a thermally conductive filler B having a volume average particle diameter of from 2 µm to 40 µm.

The thermally conductive filler A and the thermally conductive filler B may include thermally conductive fillers having different volume average particle diameters.

### -Thermally Conductive Filler A-

The thermally conductive filler A is a thermally conductive filler having a volume average particle diameter of from 0.15 µm to less than 2 µm.

A preferred aspect of the material of the thermally conductive filler A is as described above.

The thermally conductive filler A may be surface-treated.

From the viewpoint of suppressing the occurrence of the pump-out phenomenon, the volume average particle diameter of the thermally conductive filler A is preferably from 0.15 µm to 1.5 µm, more preferably from 0.20 µm to 1.0 µm, and still more preferably from 0.30 µm to 0.80 µm.

A procedure for measuring the volume average particle diameter of the thermally conductive filler A is as described above.

### -Thermally Conductive Filler B-

The thermally conductive filler B is a thermally conductive filler having a volume average particle diameter of from 2 µm to 40 µm.

A preferred aspect of the material of the thermally conductive filler B is as described above.

The thermally conductive filler B may be surface-treated.

From the viewpoint of suppressing the occurrence of the pump-out phenomenon, the volume average particle diameter of the thermally conductive filler B is preferably from 3 µm to 30 µm, more preferably from 3 µm to 25 µm, and still more preferably from 3 µm to 20 µm.

A procedure for measuring the volume average particle diameter of the thermally conductive filler B is as described above.

### -Preferred Aspects of Thermally Conductive Filler A and Thermally Conductive Filler B-

From the viewpoint of suppressing the occurrence of the pump-out phenomenon, it is preferable that both the thermally conductive filler A and the thermally conductive filler B contain zinc oxide, or both the thermally conductive filler A and the thermally conductive filler B contain aluminum oxide.

From the viewpoint of suppressing the occurrence of the pump-out phenomenon, a ratio of a content of the thermally conductive filler A to a content of the thermally conductive filler B (content of thermally conductive filler A/content of thermally conductive filler B) is more preferably from 0.30 to 0.80, yet more preferably from 0.50 to 0.75, and still more preferably from 0.60 to 0.70 on a mass basis.

The total content of the thermally conductive filler A and the thermally conductive filler B is preferably from 80% by mass to 100% by mass, more preferably from 90% by mass to 100% by mass, still more preferably from 95% by mass to 100% by mass, and particularly preferably 100% by mass, with respect to a total mass of the thermally conductive filler.

### (Acrylic Polymer-Based Adhesive)

The thermally conductive grease composition according to the disclosure contains an acrylic polymer-based adhesive (hereinafter, also referred to as "specific adhesive").

In the disclosure, the acrylic polymer-based adhesive means a polymer adhesive having a structural unit derived from a (meth)acrylic acid or an acrylic acid ester. The acrylic polymer may be a homopolymer or a copolymer.

From the viewpoint of suppressing the occurrence of the pump-out phenomenon, it is preferable that the specific adhesive is an acrylic polymer-based adhesive having at least one functional group selected from a hydroxy group, a carboxy group, an epoxy group, or an alkoxysilyl group (hereinafter, collectively referred to as "specific functional group"), or an acrylic polymer-based adhesive having no specific functional group.

Hereinafter, the specific adhesive having no specific functional group is referred to as "non-functional type". The term "non-functional type" specifically means that a specific functional group is not substituted in the polymer main chain or the polymer side chain.

When the specific adhesive has a specific functional group, the substitution position of the specific functional group may be either the main chain or the side chain of the polymer. The main chain represents a relatively longest bond chain in the molecule of the polymer. The specific functional group may be directly bonded to the main chain and the side chain, or may be bonded to the main chain and the side chain via a linking group. The specific functional group may be bonded to the terminal of the main chain. The number of specific functional groups is preferably 2 or more (that is, it is polyfunctional) from the viewpoint of effectively suppressing the occurrence of the pump-out phenomenon.

From the viewpoint of suppressing the occurrence of the pump-out phenomenon, the specific adhesive is preferably a non-functional group type acrylic acid ester polymer-based adhesive or an acrylic acid ester polymer-based adhesive having at least one functional group selected from an epoxy group or an alkoxysilyl group, and is preferably a non-functional group type acrylic acid ester polymer-based adhesive or an acrylic acid ester polymer-based adhesive having two or more functional groups selected from an epoxy group and an alkoxysilyl group.

A weight average molecular weight (Mw) of the specific adhesive is preferably from 1,000 to 100,000.

In a case of the specific adhesive has a hydroxy group, a hydroxyl value is preferably from 10 mgKOH/g to 200 mgKOH/g.

In a case of the specific adhesive has a carboxy group, an acid value is preferably from 30 mgKOH/g to 800 mgKOH/g.

In a case of the specific adhesive has an epoxy group, an epoxy value is preferably from 1.0 meq/g to 10.0 meq/g.

In a case of the specific adhesive has an alkoxysilyl group, the number of alkoxysilyl groups is preferably from 0.1 to 10/Mn.

The specific adhesive is preferably a polymer having a structural unit represented by the following Formula (1).

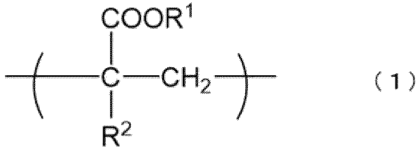

In Formula (1), R¹ represents a hydrogen atom or a linear or branched alkyl group having from 1 to 10 carbon atoms, and the carbon atom constituting the alkyl chain may be substituted with at least one group selected from a hydroxyl group, a carboxyl group, an epoxy group, or an alkoxysilyl group.

R² represents a hydrogen atom or a methyl group.

Examples of the linear or branched alkyl group having from 1 to 10 carbon atoms represented by R¹ or R² include a methyl group, an ethyl group, an n-propyl group, an isopropyl group, an n-butyl group, an isobutyl group, a sec-butyl group, a tert-butyl group, a cyclobutyl group, an n-pentyl group, an isopentyl group, a sec-pentyl group, a tert-pentyl group, a neopentyl group, a 2-methylbutyl group, a 1,2-dimethylpropyl group, a 1-ethylpropyl group, a cyclopentyl group, an n-hexyl group, an isohexyl group, a sec-hexyl group, a tert-hexyl group, a neohexyl group, a 2-methylpentyl group, a 1,2-dimethylbutyl group, a 2,3-dimethylbutyl group, a 1-ethylbutyl group, a cyclohexyl group, an n-heptyl group, an isoheptyl group, a secheptyl group, a tert-heptyl group, a neoheptyl group, a cycloheptyl group, an n-octyl group, an isooctyl group, a sec-octyl group, a tert-octyl group, a neooctyl group, a 2-ethylhexyl group, a cyclooctyl group, an n-nonyl group, an isononyl group, a sec-nonyl group, a tert-nonyl group, a neononyl group, a cyclononyl group, an n-decyl group, an isodecyl group, a sec-decyl group, a tert-decyl group, a neodecyl group, and a cyclodecyl group.

Examples of the alkoxysilyl group represented by R¹ or R² include a trimethoxysilyl group and a triethoxysilyl group.

The specific adhesive may be a polymer having a structural unit represented by Formula (1) or may have other structural units. Other structural units can be appropriately selected according to desired properties of the polymer.

The specific adhesive may be obtained as a commercially available product, and examples thereof include ARUFON (registered trademark, the same applies hereinafter) series (for example, UP-1171, UP-1010, UP-1080, UH-2000, UH-2041, UH-2190, UC-3510, UG-4010, US-6150, and US-6190) manufactured by Toagosei Co., Ltd.; and ACTFLOW (registered trademark, the same applies hereinafter) series (for example, CB-3060, CB-3098, and CBB-3098) manufactured by Soken Chemical & Engineering Co., Ltd.

The thermally conductive grease composition according to the disclosure may contain one specific adhesive or two or more specific adhesives.

From the viewpoint of suppressing the occurrence of the pump-out phenomenon, a content of the specific adhesive is preferably from 0.1% by mass to 1.0% by mass, more preferably from 0.1% by mass to 0.8% by mass, and still more preferably from 0.1% by mass to 0.5% by mass, with respect to the total mass of the thermally conductive grease composition.

### (Surface Modifier)

The thermally conductive grease composition according to the disclosure contains a surface modifier.

As the surface modifier, various surface modifiers can be used, and a compound having a moiety expressing lipophilicity and a functional group adsorbed to the thermally conductive filler is preferable. Examples of the moiety expressing lipophilicity include an alkylene group. Examples of the functional group adsorbed to the thermally conductive filler include a hydroxyl group, a carboxyl group, and an ester group.

Specific examples of the surface modifier include a carboxylic acid dispersant and a (poly)alkylene glycol compound.

The carboxylic acid dispersant is a compound having at least one carboxy group in the molecule.

The carboxylic acid dispersant is preferably a polycarboxylic acid (compound having two or more carboxy groups in one molecule).

A weight average molecular weight of the carboxylic acid dispersant is preferably from 100 or more to 2,000 or less, more preferably from 150 or more to 1,500 or less, and still more preferably from 200 or more to 1,000 or less.

The weight average molecular weight of the carboxylic acid dispersant means a weight average molecular weight in terms of polystyrene measured by gel permeation chromatography (GPC). The measurement conditions and apparatuses are as follows.
Measuring apparatus: Shodex GPC-101
Column: Shodex GPC LF-804 (number of columns: 3)
Detector: RI (differential refraction detector)
Temperature: 40°C
Mobile phase: THF (tetrahydrofuran)
Flow rate: 1 mL/min
Sample concentration: 1.0 mass%/vol%
Sample injection amount: 100 µL

Examples of the carboxylic acid dispersant include Hypermer KD-4 (weight average molecular weight: 1,700), Hypermer KD-9 (weight average molecular weight: 760), Hypermer KD-12 (weight average molecular weight: 490), and Hypermer KD-16 (weight average molecular weight: 370) manufactured by Croda Japan.

Examples of the (poly)alkylene glycol compound include a (poly)glyceryl ether represented by the following Formula (2) from the viewpoint of excellent affinity with the base oil and more excellent suppression of the occurrence of the pump-out phenomenon.

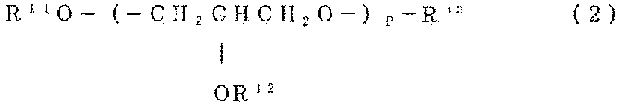

In Formula (2), R¹¹ represents a hydrocarbon group having 8 or more carbon atoms, R¹² and R¹³ each independently represents a hydrogen atom, an alkyl group having 1 or more carbon atoms, an alkenyl group having 2 or more carbon atoms, or an aryl group having 6 or more carbon atoms, and p is a coefficient representing a degree of polymerization of glycerin and is a number of 1 or more.

Examples of the hydrocarbon group having 8 or more carbon atoms (preferably from 8 to 30 carbon atoms, more preferably from 10 to 26 carbon atoms, and still more preferably from 12 to 22 carbon atoms) represented by R¹¹ include an alkyl group, an alkenyl group, and an aryl group, and an alkyl group or an alkenyl group is preferable.

R¹² is preferably a hydrogen atom, an alkyl group having from 1 to 30 carbon atoms, an alkenyl group having from 2 to 30 carbon atoms, or an aryl group having from 6 to 30 carbon atoms, and more preferably a hydrogen atom.

R¹³ is preferably a hydrogen atom, an alkyl group having from 1 to 30 carbon atoms, an alkenyl group having from 2 to 30 carbon atoms, or an aryl group having from 6 to 30 carbon atoms, and more preferably a hydrogen atom.

p is preferably a number of 1 to 5. When p is 1 or more, p is an average value.

As the (poly)glyceryl ether represented by Formula (2), monooleyl glyceryl ether is preferable from the viewpoint of suppressing the occurrence of the pump-out phenomenon.

The (poly)alkylene glycol compound is a polymer compound having a repeating structure of ether bonds (that is, a polyalkylene glycol compound), and may be produced, for example, by ring-opening polymerization of a cyclic ether.

From the viewpoint of suppressing the occurrence of the pump-out phenomenon, the polyalkylene glycol compound is preferably a polyalkylene glycol compound having a hydroxy group.

Examples of the polyalkylene glycol compound having a hydroxy group include polyalkylene glycol and an etherified product of polyalkylene glycol.

Examples of the polyalkylene glycol include polyethylene glycol, polypropylene glycol, and polybutylene glycol.

Examples of the etherified product of the polyalkylene glycol include a compound in which polyalkylene glycol and a hydrocarbon group are bonded by an ether bond.

The carbon number of the hydrocarbon group contained in the etherified product of the (poly)alkylene glycol is, for example, from 12 to 35.

The structure of the hydrocarbon group is not particularly limited, and may be linear, branched, or cyclic.

Specific examples of the etherified product of the (poly)alkylene glycol include monooleyl glyceryl ether, polyoxyethylene monooleyl ether, polyoxyethylene monostearyl ether, polyoxyethylene monocetyl ether, and polyoxyethylene lanolin alcohol, and monooleyl glyceryl ether is preferable from the viewpoint of suppressing the occurrence of the pump-out phenomenon.

The surface modifier preferably contains at least one selected from a fatty acid ester condensate or a (poly)glyceryl ether represented by Formula (2) from the viewpoint of suppressing the occurrence of the pump-out phenomenon.

A content of the surface modifier is preferably from 0.05% by mass to 1.0% by mass, more preferably from 0.1% by mass to 0.7% by mass, and still more preferably from 0.1% by mass to 0.5% by mass, with respect to the entire thermally conductive grease composition.

The surface modifier in the thermally conductive grease composition may be contained singly, or in combination of two or more kinds thereof.

### (Other Additives)

The thermally conductive grease composition according to the disclosure may contain additives other than the base oil, the thermally conductive filler, the specific adhesive, and the surface modifier.

Examples of other additives include an antioxidant, a rust inhibitor, a corrosion inhibitor, a thickener, a viscosity increasing agent, and a cleaning agent.

### (Physical Property Values of Thermally Conductive Grease Composition)

### -Thermal Conductivity -

A thermal conductivity of the thermally conductive grease composition according to the disclosure is preferably 3.0 W/(m·K) or more, more preferably 3.5 W/(m·K) or more, and still more preferably 4.0 W/(m·K) or more from the viewpoint of improving the efficiency of heat dissipation.

The thermal conductivity is measured in accordance with ISO22007-2.

As an apparatus for measuring the thermal conductivity, for example, TPS2500S manufactured by Kyoto Electronics Manufacturing Co., Ltd. can be used.

### -Unworked Consistency-

An unworked consistency of the thermally conductive grease composition according to the disclosure is preferably from 140 to 300, more preferably from 150 to 290, and still more preferably from 160 to 280, from the viewpoint of suppressing the occurrence of the pump-out phenomenon and from the viewpoint of actual use.

The unworked consistency is measured in accordance with JIS-K2220:7.

### (Application)

The thermally conductive grease composition according to the disclosure is excellent in suppressing the occurrence of the pump-out phenomenon, and can be applied to gaps between various heating elements and heat radiators.

Examples of the heating element include a semiconductor component, and examples of the heat radiator include a heat sink.

### (Method for Preparing Thermally Conductive Grease Composition)

A method for preparing a thermally conductive grease composition is not particularly limited, and other additives may be appropriately mixed, if necessary, in addition to the base oil, the thermally conductive filler, the specific adhesive, and the surface modifier.

A mixing order of the base oil, the thermally conductive filler, the specific thickener, the surface modifier, and other additives is not particularly limited, and these materials may be sequentially mixed with the base oil.

### Examples

Hereinafter, Examples will be described, but the thermally conductive grease composition according to the disclosure is not limited to these Examples at all.

### <Examples 1 to 28 and Comparative Example 1>

A base oil, a thermally conductive filler, a specific adhesive, a surface modifier, and other additives (antioxidant and acid dispersant) were mixed at blending ratios (% by mass) shown in Tables 1 and 2 to prepare a thermally conductive grease composition.

### <Evaluation>

The following performance evaluation was performed using each of the obtained thermally conductive grease compositions. The results are shown in Tables 1 and 2.

### (Thermal Conductivity)

The thermal conductivity was measured in accordance with ISO22007-2.

As an apparatus for measuring the thermal conductivity, TPS2500S manufactured by Kyoto Electronics Manufacturing Co., Ltd. was used.

### (Unworked Consistency)

Measurement was performed in accordance with JIS-K2220.

An unworked consistency of "from 140 to 300" indicates an unworked consistency to be put to practical use.

### (Evaluation of Pump-Out Property)

A spacer having a thickness of 0.5 mm was installed between an aluminum plate (trade name: A5052P, length 80 mm × width 60 mm × thickness 1 mm) and a slide glass (length 76 mm × width 26 mm × thickness from 1.2 mm to 1.5 mm), and a given amount of grease was applied and sandwiched therebetween to obtain a test piece. At the time of preparing the test piece, the amount of grease was set to be a circle having a diameter of 15 mm when sandwiched. The aluminum plate and the slide glass were used as test pieces with longitudinal directions thereof aligned in the same direction.

A thermal shock test was performed by repeatedly changing the temperature between -40°C and 85°C with the longitudinal direction of the test piece set as a vertical direction. In the thermal shock test, cooling of a sample under the conditions of -40°C for 30 minutes and then heating of the sample under the conditions of 85°C for 30 minutes was set as one cycle, and a total of 500 cycles were performed. For the heating and cooling test, a thermal shock testing machine TSE-11-A manufactured by ESPEC Corp. was used.

After 500 cycles, a distance (mm) of movement of the grease from the original position was measured, and the pump-out property was evaluated.

Based on the measured movement distance, the pump-out property was evaluated according to the following evaluation criteria. The smaller the movement distance, the smaller the occurrence of the pump-out phenomenon.

### -Evaluation Criteria-

A: Movement distance is less than 5 mm
B: Movement distance is from 5 mm to less than 10 mm
C: Movement distance is from 10 mm to less than 20 mm
D: Movement distance is 20 mm or more

**[Table 1]**

| | | | | Example 1 | Example 2 | Example 3 | Example 4 | Example 5 | Example 6 | Example 7 | Example 8 | Example 9 | Example 10 | Example 11 | Example 12 | Example 13 | Example 14 | Example 15 | Example 16 |
|---|---|---|---|---|---|---|---|---|---|---|---|---|---|---|---|---|---|---|---|
| Composition | Oil component | | | | | | | | | | | | | | | | | | |
| | Base oil | Polyalphaolefin 1 | % by mass | 0.20 | 0.20 | 0.20 | 0.20 | 0.20 | 0.20 | 0.20 | 0.20 | 0.20 | 0.20 | 0.20 | 0.20 | 0.20 | 0.20 | 0.20 | 0.20 |
| | | Polyalphaolefin 2 | % by mass | 0.20 | 0.20 | 0.20 | 0.20 | 0.20 | 0.20 | 0.20 | 0.20 | 0.20 | 0.20 | 0.20 | 0.20 | 0.20 | 0.20 | 0.20 | 0.20 |
| | | Polyalphaolefin 3 | % by mass | 3.58 | 3.38 | 3.58 | 3.38 | 3.58 | 3.38 | 3.58 | 3.38 | 3.58 | 3.38 | 3.58 | 3.38 | 3.58 | 3.38 | 3.58 | 3.38 |
| | | Organic acid ester 1 | % by mass | 0.20 | 0.20 | 0.20 | 0.20 | 0.20 | 0.20 | 0.20 | 0.20 | 0.20 | 0.20 | 0.20 | 0.20 | 0.20 | 0.20 | 0.20 | 0.20 |
| | | Organic acid ester 2 | % by mass | 0.23 | 0.23 | 0.23 | 0.23 | 0.23 | 0.23 | 0.23 | 0.23 | 0.23 | 0.23 | 0.23 | 0.23 | 0.23 | 0.23 | 0.23 | 0.23 |
| | Other additives | Antioxidant | % by mass | 0.15 | 0.15 | 0.15 | 0.15 | 0.15 | 0.15 | 0.15 | 0.15 | 0.15 | 0.15 | 0.1S | 0.15 | 0.15 | 0.15 | 0.15 | 0.15 |
| | Surface modifier | Surface modifier 1 | % by mass | 0.14 | 0.14 | 0.14 | 0.14 | 0.14 | 0.14 | 0.14 | 0.14 | 0.14 | 0.14 | 0.14 | 0.14 | 0.14 | 0.14 | 0.14 | 0.14 |
| | | Surface modifier 2 | % by mass | 0.10 | 0.10 | 0.10 | 0.10 | 0.10 | 0.10 | 0.10 | 0.10 | 0.10 | 0.10 | 0.10 | 0.10 | 0.10 | 0.10 | 0.10 | 0.10 |
| | Specific adhesive | Non-functional | % by mass | 0.20 | 0.40 | - | - | - | - | - | - | - | - | - | - | - | - | - | - |
| | | Non-functional | % by mass | - | - | 0.20 | 0.40 | - | - | - | - | - | - | - | - | - | - | - | - |
| | | Non-functional | % by mass | - | - | - | - | 0.20 | 0.40 | - | - | - | - | - | - | - | - | - | - |
| | | OH group-containing | % by mass | - | - | - | - | - | - | 0.20 | 0.40 | - | - | - | - | - | - | - | - |
| | | OH group-containing | % by mass | - | - | - | - | - | - | - | - | 0.20 | 0.40 | - | - | - | - | - | - |
| | | OH group-containing | % by mass | - | - | - | - | - | - | - | - | - | - | 0.20 | 0.40 | - | - | - | - |
| | | COOH group-containing | % by mass | - | - | - | - | - | - | - | - | - | - | - | - | 0.20 | 0.40 | - | - |
| | | COOH group-containing | % by mass | - | - | - | - | - | - | - | - | - | - | - | - | - | - | 0.20 | 0.40 |
| | | COOH group-containing | % by-mass | - | - | - | - | - | - | - | - | - | - | - | - | - | - | - | - |
| | | COOH group-containing | % by mass | - | - | - | - | - | - | - | - | - | - | - | - | - | - | - | - |
| | | COOH group-containing | % by mass | - | - | - | - | - | - | - | - | - | - | - | - | - | - | - | - |
| | | Alkoxysilyl group-containing | % by mass | - | - | - | - | - | - | - | - | - | - | - | - | - | - | - | - |
| | | Alkoxysilyl group-containing | % by mass | - | - | - | - | - | - | - | - | - | - | - | - | - | - | - | - |
| | | Alkoxysilyl group-containing | % by mass | - | - | - | - | - | - | - | - | - | - | - | - | - | - | - | - |
| | Thermally conductive filler | | | - | - | - | - | - | - | - | | | - | - | - | - | - | - | - |
| | (A) | Zinc oxide (small particle diameter) 0.6 µm | % by mass | 38.00 | 38.00 | 38.00 | 38.00 | 38.00 | 38.00 | 38.00 | 38.00 | 38.00 | 38.00 | 38.00 | 38.00 | 38.00 | 38.00 | 38.00 | 3800 |
| | (B) | Zinc oxide (large particle diameter) 11 µm | % by mass | 57.00 | 57.00 | 57.00 | 57.00 | 57.00 | 57.00 | 57.00 | 57.00 | 57.00 | 57.00 | 57.00 | 57.00 | 57.00 | 57.00 | 57.00 | 57.00 |
| | Total amount of oil component and thermally conductive filler (% by mass) | | | 100.00 | 100.00 | 100.00 | 100.00 | 100.00 | 100.00 | 100.00 | 100.00 | 100.00 | 100.00 | 100.00 | 100.00 | 100.00 | 100.00 | 100.00 | 100.00 |
| Blending ratio | | Oil component | % by mass | 5.00 | 5.00 | 5.00 | 5.00 | 5.00 | 5.00 | 5.00 | 5.00 | 5.00 | 5.00 | 5.00 | 5.00 | 5.00 | 5.00 | 5.00 | 5.00 |
| | | Thermally conductive filler | % by mass | 95.00 | 95.00 | 95.00 | 95.00 | 95.00 | 95.00 | 95.00 | 95.00 | 95.00 | 95.00 | 95.00 | 95.00 | 95.00 | 95.00 | 95.00 | 95.00 |
| | | | | | | | | | | | | | | | | | | | |
| Evaluation result | | Thermal conductivity (QTM-500/resistive-thermal device ASTM) | W/(m·K) | 5.00 | 5.00 | 5.00 | 5.00 | 5.00 | 5.00 | 5.00 | 5.00 | 5.00 | 5.00 | 5.00 | 5.00 | 5.00 | 5.00 | 5.00 | 5.00 |
| | | Consistency 1/4 unworked | | 249 | 230 | 242 | 223 | 242 | 230 | 230 | 223 | 238 | 227 | 227 | 215 | 215 | 193 | 234 | 227 |
| | | Pump-out property | | A | A | A | A | A | A | A | C | C | C | A | B | C | C | A | A |

**[Table 2]**

| | | | | Example 17 | Example 18 | Example 19 | Example 20 | Example 21 | Example 22 | Example 23 | Example 24 | Example 25 | Example 26 | Example 27 | Example 28 | Comparative Example 1 |
|---|---|---|---|---|---|---|---|---|---|---|---|---|---|---|---|---|
| Composition | Oil component | | | | | | | | | | | | | | | |
| | Base oil | Polyalphaolefin 1 | % by mass | 0.20 | 0.20 | 0.20 | 0.20 | 0.20 | 0.20 | 0.20 | 0.20 | 0.20 | 0.20 | 0.20 | 0.20 | 3.53 |
| | | Polyalphaolefin 2 | % by mass | 0.20 | 0.20 | 0.20 | 0.20 | 0.20 | 0.20 | 0.20 | 0.20 | 0.20 | 0.20 | 0.20 | 0.20 | |
| | | Polyalphaolefin 3 | % by mass | 3.58 | 3.38 | 3.58 | 3.38 | 3.58 | 3.38 | 3.58 | 3.38 | 3.58 | 3.38 | 3.58 | 3.38 | |
| | | Organic acid ester 1 | % by mass | 0.20 | 0.20 | 0.20 | 0.20 | 0.20 | 0.20 | 0.20 | 0.20 | 0.20 | 0.20 | 0.20 | 0.20 | 1.18 |
| | | Organic acid ester 2 | % by mass | 0.23 | 0.23 | 0.23 | 0.23 | 0.23 | 0.23 | 0.23 | 0.23 | 0.23 | 0.23 | 0.23 | 0.23 | |
| | Other additives | Antioxidant | % by mass | 0.15 | 0.15 | 0.15 | 0.15 | 0.15 | 0.15 | 0.15 | 0.15 | 0.15 | 0.15 | 0.15 | 0.15 | 0.15 |
| | Surface modifier | Surface modifier 1 | % by mass | 0.14 | 0.14 | 0.14 | 0.14 | 0.14 | 0.14 | 0.14 | 0.14 | 0.14 | 0.14 | 0.14 | 0.14 | 0.14 |
| | | Surface modifier 2 | % by mass | 0.10 | 0.10 | 0.10 | 0.10 | 0.10 | 0.10 | 0.10 | 0.10 | 0.10 | 0.10 | 0.10 | 0.10 | - |
| | Specific adhesive | Non-functional | % by mass | - | - | - | - | - | - | - | - | - | - | - | - | - |
| | | Non-functional | % by mass | - | - | - | - | - | - | - | - | - | - | - | - | - |
| | | Non-functional | % by mass | - | - | - | - | - | - | - | - | - | - | - | - | - |
| | | OH group containing | % by mass | - | - | - | - | - | - | - | - | - | - | - | - | - |
| | | OH group-containing | % by mass | - | - | - | - | - | - | - | - | - | - | - | - | - |
| | | OH group-containing | % by mass | - | - | - | - | - | - | - | - | - | - | - | - | - |
| | | COOH group-containing | % by mass | - | - | - | - | - | - | - | - | - | - | - | - | - |
| | | COOH group-containing | % by mass | - | - | - | - | - | - | - | - | - | - | - | - | - |
| | | COOH group-containing | % by mass | - | - | - | - | 0.20 | 0.40 | - | - | - | - | - | - | - |
| | | COOH group-containing | % by mass | - | - | - | - | - | - | 0.20 | 0.40 | - | - | - | - | - |
| | | COOH group-containing | % by mass | - | - | - | - | - | - | - | - | 0.20 | 0.40 | - | - | - |
| | | Alkoxysilyl group-containing | % by mass | 0.20 | 0.40 | - | - | - | - | - | - | - | - | - | - | - |
| | | Alkoxysilyl group-containing | % by mass | - | - | 0.20 | 0.40 | - | - | - | - | - | - | - | - | - |
| | | Alkoxysilvl qroup-containing | % by mass | - | - | - | - | - | - | - | - | - | - | 0.20 | 0.40 | - |
| | Thermally conductive filler | | | - | - | - | - | - | - | - | - | - | - | - | - | - |
| | (A) | Zinc oxide (small particle diameter) 0.6 µm | % by mass | 38.00 | 38.00 | 38.00 | 38.00 | 38.00 | 38.00 | 38.00 | 38.00 | 38.00 | 38.00 | 38.00 | 38.00 | 38.00 |
| | (B) | Zinc oxide (large particle diameter) 11 µm | %-by-mass | 57.00 | 57.00 | 57.00 | 57.00 | 57.00 | 57.00 | 57.00 | 57.00 | 57.00 | 57.00 | 57.00 | 57.00 | 57.00 |
| | Total amount of oil component and thermally conductive filler (% by mass) | | | 100.00 | 100.00 | 100.00 | 100.00 | 100.00 | 100.00 | 100.00 | 100.00 | 100.00 | 100.00 | 100.00 | 100.00 | 100.00 |
| Blending ratio | | Oil-component | % by mass | 5.00 | 5.00 | 5.00 | 5.00 | 5.00 | 5.00 | 5.00 | 5.00 | 5.00 | 5.00 | 5.00 | 5.00 | 5.00 |
| | | Thermally conductive filler | % by mass | 95.00 | 95.00 | 95.00 | 95.00 | 95.00 | 95.00 | 95.00 | 95.00 | 95.00 | 95.00 | 95.00 | 95.00 | 95.00 |
| | | | | | | | | | | | | | | | | |
| Evaluation result | | Thermal conductivity (QTM-500/resistive-thermal-device ASTM) | ' W/(m·K) | 5.00 | 5.00 | 5.00 | 5.00 | 5.00 | 5.00 | 5.00 | 5.00 | 5.00 | 5.00 | 5.00 | 5.00 | 5.00 |
| | | Consistency 1/4 unworked | | 223 | 208 | 223 | 208 | 215 | 204 | 230 | 204 | 197 | 155 | 212 | 208 | 270 |
| | | Pump-out property | | A | A | A | A | A | C | C | C | C | C | C | C | D |

In Tables 1 and 2, the "oil component" described in the column of composition is a generic term for components other than the thermally conductive filler among the components contained in the thermally conductive grease composition.

In Tables 1 and 2, the term "oil component" in the column of blending ratio indicates the total content of the oil component with respect to the entire thermally conductive grease composition, and the term "thermally conductive filler" indicates the total content of the thermally conductive filler with respect to the entire thermally conductive grease composition.

In Tables 1 and 2, "-" in the composition column means that the corresponding component is not blended.

Details of the abbreviations in Tables 1 and 2 are described below.

### (Base Oil)

### -Polyalphaolefin-

· Polyalphaolefin 1: trade name; DURASYN-168, manufactured by INEOS Oligomeres, polyalphaolefin (polymer of 1-decene), 40°C kinematic viscosity: 46.4 mm²/s
· Polyalphaolefin 2: trade name; DURASYIN-170, manufactured by INEOS Oligomeres, polyalphaolefin (polymer of 1-decene), 40°C kinematic viscosity: 65.3 mm²/s
· Polyalphaolefin 3: trade name; DURASYIN-174I, manufactured by INEOS Oligomeres, polyalphaolefin (polymer of 1-decene), 40°C kinematic viscosity: 412 mm²/s

### -Organic Acid Ester-

· Organic acid ester 1: trade name; KAOLUBE 262, manufactured by Kao Corporation, pentaerythritol ester, 40°C kinematic viscosity: 32.9 mm²/s
· Organic acid ester 2: trade name; UNISTER H-310R, manufactured by NOF CORPORATION, trimethylolpropane fatty acid ester, 40°C kinematic viscosity: 24.5 mm²/s

### (Thermally Conductive Filler)

· (A): trade name; 1 kind of zinc oxide, manufactured by Sakai Chemical Industry Co., Ltd., zinc oxide particles, volume average particle diameter 0.6 µm
· (B): trade name; LPZINC-11, manufactured by Sakai Chemical Industry Co., Ltd., zinc oxide particles, volume average particle diameter 11 µm

### (Specific Adhesive)

· UP-1171: trade name; ARUFON UP-1171, manufactured by Toagosei Co., Ltd., non-functional group type
· UP-1010: trade name; ARUFON UP-1010, manufactured by Toagosei Co., Ltd., non-functional group type
· UP-1080: trade name; ARUFON UP-1080, manufactured by Toagosei Co., Ltd., non-functional group type
· UH-2000: trade name; ARUFON UH-2000, manufactured by Toagosei Co., Ltd., specific substituent; hydroxy group
· UH-2041: trade name; ARUFON UH-2041, manufactured by Toagosei Co., Ltd., specific substituent; hydroxy group
· UH-2190: trade name; ARUFON UH-2190, manufactured by Toagosei Co., Ltd., specific substituent; hydroxy group
· UC-3510: trade name; ARUFON UC-3510, manufactured by Toagosei Co., Ltd., specific substituent; carboxy group
· UG-4010: trade name; ARUFON UG-4010, manufactured by Toagosei Co., Ltd., specific substituent; epoxy group
· US-6150: trade name; ARUFON US-6150, manufactured by Toagosei Co., Ltd., specific substituent; alkoxysilyl group
· US-6190: trade name; ARUFON US-6190, manufactured by Toagosei Co., Ltd., specific substituent; hydroxy group
· CB-3060: trade name; ACTFLOW CB-3060, manufactured by Soken Chemical & Engineering Co., Ltd., specific substituent; carboxy group
· CB-3098: trade name; ACTFLOW CB-3098, manufactured by Soken Chemical & Engineering Co., Ltd., specific substituent; carboxy group
· CBB-3098: trade name; ACTFLOW CB-3098, manufactured by Soken Chemical & Engineering Co., Ltd., specific substituent; alkoxysilyl group

### (Surface Modifier)

· Surface modifier 1: trade name; Selachyl Alcohol V, manufactured by NIPPON SURFACTANT INDUSTRIES CO., LTD., monooleyl glyceryl ether
· Surface modifier 2: trade name; Hypermer KD-9, manufactured by Croda Japan, carboxylic acid dispersant, polycarboxylic acid, weight average molecular weight: 760

### (Other Additives)

### -Antioxidant-

- Trade name; Irganox L57, manufactured by BASF Japan Ltd., reaction product of N-phenylbenzenamine and 2,4,4-trimethylpentene

From the results shown in Tables 1 and 2, it is found that the thermally conductive grease composition of the example suppresses the occurrence of the pump-out phenomenon.

## Claims

1. A thermally conductive grease composition, comprising:
a base oil;
a thermally conductive filler;
an acrylic polymer-based adhesive; and
a surface modifier.

2. The thermally conductive grease composition according to claim 1, wherein the acrylic polymer-based adhesive is an acrylic polymer-based adhesive having at least one functional group selected from a hydroxy group, a carboxy group, an epoxy group, or an alkoxysilyl group, or an acrylic polymer-based adhesive that does not have the at least one functional group.

3. The thermally conductive grease composition according to claim 1 or 2, wherein the thermally conductive filler comprises a zinc oxide.

4. The thermally conductive grease composition according to any one of claims 1 to 3, wherein the thermally conductive filler contains a thermally conductive filler A having a volume average particle diameter of from 0.15 µm to less than 2 µm and a thermally conductive filler B having a volume average particle diameter of from 2 µm to 40 µm.

5. The thermally conductive grease composition according to any one of claims 1 to 4, wherein the base oil comprises a polyalphaolefin and an organic acid ester.

6. The thermally conductive grease composition according to any one of claims 1 to 5, wherein the surface modifier comprises a (poly)glyceryl ether.

## Patentansprüche

1. Wärmeleitfähige Schmierfettzusammensetzung, umfassend:
ein Grundöl;
einen wärmeleitfähigen Füllstoff;
einen Klebstoff auf Acrylpolymerbasis; und
ein Oberflächenmodifizierungsmittel.

2. Wärmeleitfähige Schmierfettzusammensetzung nach Anspruch 1, wobei der Klebstoff auf Acrylpolymerbasis ein Klebstoff auf Acrylpolymerbasis ist, der mindestens eine funktionelle Gruppe aufweist, die aus einer Hydroxygruppe, einer Carboxygruppe, einer Epoxygruppe oder einer Alkoxysilylgruppe ausgewählt ist, oder ein Klebstoff auf Acrylpolymerbasis ist, der die mindestens eine funktionelle Gruppe nicht aufweist.

3. Wärmeleitfähige Schmierfettzusammensetzung nach Anspruch 1 oder 2, wobei der wärmeleitfähige Füllstoff ein Zinkoxid umfasst.

4. Wärmeleitfähige Schmierfettzusammensetzung nach einem der Ansprüche 1 bis 3, wobei der wärmeleitfähige Füllstoff einen wärmeleitfähigen Füllstoff A mit einem volumenmittleren Partikeldurchmesser von 0,15 µm bis weniger als 2 µm und einen wärmeleitfähigen Füllstoff B mit einem volumenmittleren Partikeldurchmesser von 2 µm bis 40 µm enthält.

5. Wärmeleitfähige Schmierfettzusammensetzung nach einem der Ansprüche 1 bis 4, wobei das Grundöl ein Polyalphaolefin und einen organischen Säureester umfasst.

6. Wärmeleitfähige Schmierfettzusammensetzung nach einem der Ansprüche 1 bis 5, wobei das Oberflächenmodifizierungsmittel einen (Poly)glycerylether umfasst.

## Revendications

1. Composition de graisse thermoconductrice comprenant :
une huile de base ;
une charge thermoconductrice ;
un adhésif à base de polymère acrylique ; et
un modificateur de surface.

2. Composition de graisse thermoconductrice selon la revendication 1, dans laquelle l'adhésif à base de polymère acrylique est un adhésif à base de polymère acrylique comportant au moins un groupe fonctionnel choisi parmi un groupe hydroxy, un groupe carboxy, un groupe époxy ou un groupe alcoxysilyle, ou un adhésif à base de polymère acrylique qui ne comporte pas l'au moins un groupe fonctionnel.

3. Composition de graisse thermoconductrice selon la revendication 1 ou 2, dans laquelle la charge thermoconductrice comprend un oxyde de zinc.

4. Composition de graisse thermoconductrice selon l'une quelconque des revendications 1 à 3, dans laquelle la charge thermoconductrice contient une charge thermoconductrice A présentant un diamètre moyen des particules en volume de 0,15 µm à moins de 2 µm et une charge thermoconductrice B présentant un diamètre moyen des particules en volume de 2 µm à 40 µm.

5. Composition de graisse thermoconductrice selon l'une quelconque des revendications 1 à 4, dans laquelle l'huile de base comprend une polyalphaoléfine et un ester d'acide organique.

6. Composition de graisse thermoconductrice selon l'une quelconque des revendications 1 à 5, dans laquelle le modificateur de surface comprend un éther de (poly)glycéryle.
